# EUROPEAN PATENT APPLICATION

(11) **EP 2 287 733 A1**
(43) Date of publication of application: **23.02.2011**
(21) Application number: 10004442.9
(22) Date of filing: 27.04.2010
(51) Int. Cl.: G06F 9/445, G06F 21/00

(54) **Method and apparatus and digital tv capable of preventing erroneous start of firmware update**

(30) Priority: 18.08.2009 TW 098127703
(71) Applicant: Wistron Corporation, Taipei Hsien 221 (TW)
(72) Inventor: Wang, Shu-Yuan, Hsi-Chih City Taipei Hsien (TW)
(74) Representative: Görz, Ingo

(57) **Abstract**

A method capable of preventing erroneous start of firmware update in a digital television (10) includes detecting whether there is an update program corresponding to the firmware in a DTV radio channel to generate a detection result (302), generating a first indication message to indicate to input a downloading command for triggering download of the update program when the detection result shows that there is the update program corresponding to the firmware in the DTV radio channel (304), generating a second indication message to indicate to input a check password when receiving the download command (308), checking whether the check password fits a default password of the DTV to generate a check result when receiving the check password (310), and determining whether to replace the firmware by the update program according to the check result (310).

## Description

The present invention relates to a method, electronic apparatus and digital TV capable of preventing erroneous start of firmware update according to the pre-characterizing clause of claims 1, 6 and 11.

Conventional television (TV) signals are transmitted in analog forms and easily interfered by noises, resulting in poor system stability, signal distortion, etc. With advances in communication and visual technology, conventional analog TV systems are gradually replaced by digital TV (DTV) systems. Since the DTV systems digitalize TV program signals, interferences caused by noises can be minimized, so as to enhance both video and audio qualities. In addition, the DTV systems have an advantage of high frequency spectrum utilization efficiency, and further support bidirectional interactive functions, such as on-line TV shopping, movie selection, "Over The Air Download" (or wireless download), etc.

In the DTV systems, "Over The Air Download" is commonly used in TV software (or firmware) update. That is, when a manufacturer intends to update firmware of a DTV just leaving a factory, related data can be converted into streams conforming to DTV transmission standards, and broadcasted through TV stations in specific periods. When a user watches TV programs in these specific periods, the DTV can detect if there is an update program corresponding to the firmware. If true, the DTV queries the user whether or not to download the update program by popping out an information window. Next, if the user chooses to download the update program, the DTV queries the user whether or not to update the firmware when the update program is completely downloaded. If the user chooses to update the firmware, the DTV updates the firmware to include more functions or fix existing program bugs. Therefore, using "Over The Air Download", the user can update the firmware of the DTV via wireless transmission to enhance functionality or fix program bugs.

In general, to avoid firmware update failure, the DTV disables all other control functions, such as channel control, volume control, display parameter adjustment, etc., during the firmware update process, and resumes these control functions after the firmware update is completed. That is, during the firmware update process, the user cannot control the DTV via a corresponding remote controller or functional keypads on a TV chassis. In such a situation, those who are unfamiliar with DTV operations, like children, incautious elders, etc., probably ascribe the uncontrollable period to an overheating problem, and intuitively turn off and reboot the DTV. However, since the user cannot control the DTV by any keypad, the user tends to pull out and then reinsert a power line. Such an operation results in firmware update failure, and in the worst case, the user can no longer turn on the DTV, and has to call for professional technical support to rewrite or replace the firmware.

In short, without adequate protection schemes, the user probably shuts off power supply of the DTV due to unfamiliarity with the firmware update process when the convention DTV downloads the update program to update the firmware according to "Over The Air Download", and results in firmware update failure as well as an DTV that no longer can be normally turned on, causing inconvenience of usage.

This in mind, the present invention aims at providing a method, electronic apparatus and digital TV capable of preventing erroneous start of firmware update, preventing a user from erroneously interrupting power supply due to unfamiliarity with a firmware update process that prevents unnecessary deletion of data and waste of system resources, and improving transmission efficiency.

This is achieved by a method, electronic apparatus and digital TV capable of preventing erroneous start of firmware update according to claims 1, 6 and 11. The dependent claims pertain to corresponding further developments and improvements.

As will be seen more clearly from the detailed description following below, the claimed method capable of preventing erroneous start of firmware update in a digital television, abbreviated to DTV hereinafter, comprises detecting whether an update program corresponding to the firmware is transmitted via a DTV broadcasting channel to generate a detection result, generating a first indication message indicating to input a downloading command for triggering downloading of the update program when the detection result indicates that the update program corresponding to the firmware is transmitted via the DTV broadcasting channel, generating a second indication message indicating to input a verification password when the downloading command is received, checking whether the verification password conforms to a default password of the DTV when the verification password is received, to generate a verification result, and determining whether to replace the firmware with the update program according to the verification result.

In the following, the invention is further illustrated by way of example, taking reference to the accompanying drawings. Thereof
FIG. 1 is a block diagram of a digital television according to an embodiment of the present invention.
FIG. 2A is a block diagram of a firmware update device shown in FIG. 1.
FIG. 2B is a block diagram of a control module shown in FIG. 2A.
FIG. 3 is a block diagram of an operation process according to an embodiment of the present invention.

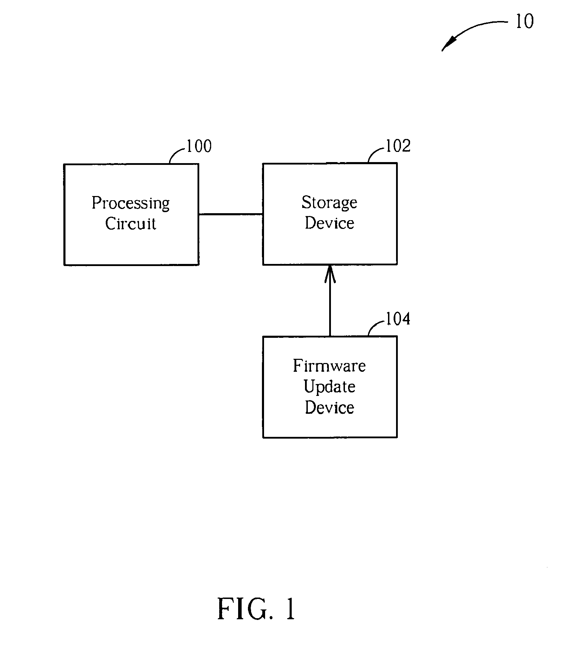

Please refer to FIG. 1, which is a block diagram of a digital television (DTV) 10 according to an embodiment of the present invention. The DTV 10 can prevent erroneous start of firmware update, and includes a processing circuit 100, a storage device 102 and a firmware update device 104. The storage device 102 stores operation functions (usually referred as firmware) of the DTV 10. The processing circuit 100 includes components required for implementing the DTV 10, to perform different functions according to the firmware stored in the storage device 102. Note that, since details of the processing circuit 100 are not the major concerns of the present invention, the processing circuit 100 is merely represented by a block in FIG. 1, and can be modified and varied by those skilled in the art based upon different requirements. In the DTV 10, the firmware update device 104 is utilized for updating the firmware stored in the storage device 102, and details thereof will be described in the following.

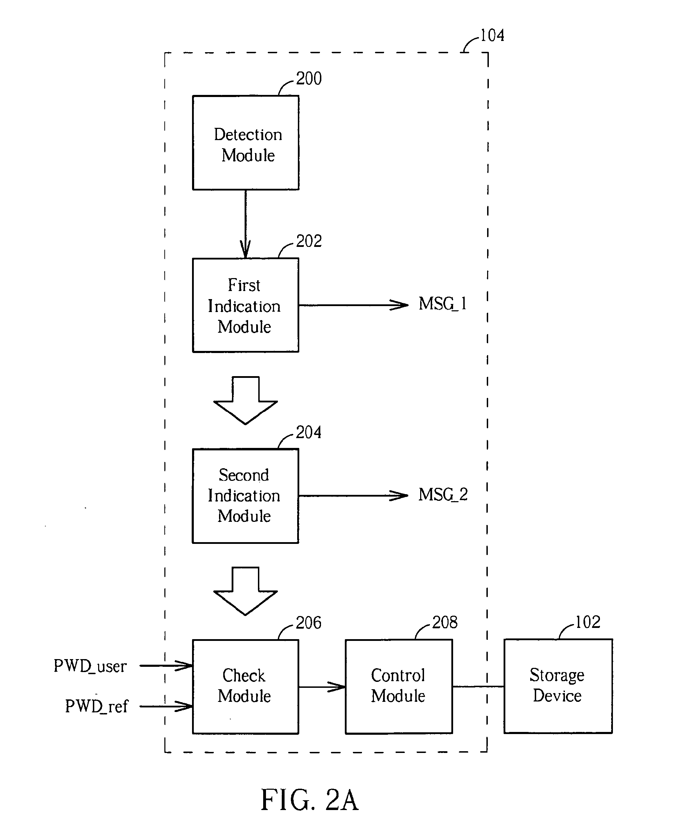

Please refer to FIG. 2A, which is a block diagram of the firmware update device 104 shown in FIG. 1. The firmware update device 104 includes a detection module 200, a first indication module 202, a second indication module 204, a check module 206 and a control module 208. The detection module 200 is utilized for detecting whether or not an update program corresponding to the firmware is transmitted via a DTV broadcasting channel, i.e. determining whether a firmware of a newer version can replace the original firmware stored in the storage device 102. If a detection result of the detection module 200 indicates that the update program exists, the first indication module 202 generates a first indication message MSG_1 for indicating the user to input a downloading command for triggering downloading of the update program. Next, when the downloading command is received, the second indication module 204 generates a second indication message MSG_2 for indicating the user to input a verification password PWD_user. When the verification password PWD_ref is received, the check module 206 checks whether the verification password PWD_user conforms to a default password PWD_ref of the DTV 10, to provide a verification result. As a result, the control module 208 can determine whether or not to trigger firmware update based upon the verification result.

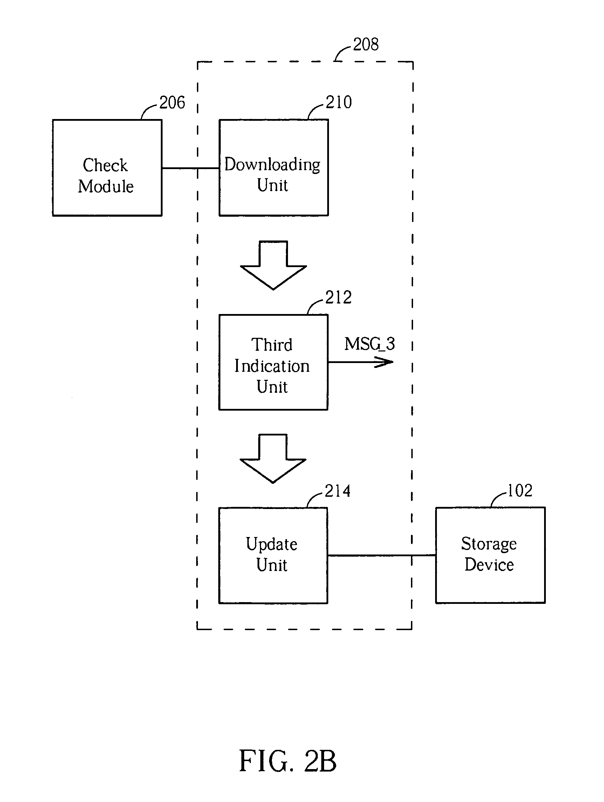

Please refer to FIG. 2B, which is a block diagram of the control module 208 shown in FIG. 2A. The control module 208 includes a downloading unit 210, a third indication unit 212 and an update unit 214. The downloading unit 210 is utilized for downloading the update program via the DTV broadcasting channel when the verification result of the check module 206 indicates that the received verification password PWD_user conforms to the default password PWD_ref. When the update program is completely downloaded, the third indication unit 212 generates a third indication message MSG_3 to indicate the user to input a start command for triggering firmware update. Finally, when the start command is received, the update unit 214 replaces the original firmware with the update program downloaded by the downloading unit 210.

In short, when the detection module 200 detects that there is a firmware of a newer version, the first indication module 202 informs the user that there is a firmware of a newer version via the first indication message MSG_1, and asks the user to determine whether or not to download the update program. If the user determines to download the update program, the second indication module 204 generates the second indication message MSG_2 to ask the user to input the verification password PWD_user. In other words, according to the present invention, once the user determines to download the update program, the user has to input the verification password PWD_user. In such a situation, if the check module 206 indicates that the inputted verification password PWD_user does not conform to the default password PWD_ref, the control module 208 can determine that the user does not have update authority, or the start of firmware update is erroneous, and terminate the firmware update process. As a result, erroneous start of firmware update can be eliminated. On the contrary, if the verification result generated by the check module indicates that the inputted verification password PWD_user conforms to the default password PWD_ref, the control module 208 can determine that the user desires to update the firmware, and accordingly perform related operations.

Therefore, when a TV manufacturer updates software, firmware, etc. according to "Over The Air Download", the present invention can prevent the user from erroneously starting firmware update by the protection scheme of password verification. As a result, without the correct password, those who are unfamiliar with DTV operations, like children, incautious elders, etc., no longer erroneously shut off power supply of the DTV when there is a firmware of a newer version to be updated, so as to guarantee that the DTV 10 can normally operate.

Note that, FIG. 2A and FIG. 2B illustrate two possible embodiments of the firmware update device 104, and related functional blocks, block names, connection methods, etc. are created to describe spirits of the present invention. In practical, the firmware update device 104 can further be implemented by software, hardware, or combination of software and hardware. Certainly, implementation of the firmware update device 104 is not a major concern of the present invention, and depends on practical system requirements. For example, the default password PWD_ref can be set before the DTV leaves a factory, or can be a parental lock password utilized for limiting watching authority of minors. Furthermore, in the DTV systems, the user has to insert an external authority card to acquire authority when desiring to watch a pay channel, and thus the external authority card can be regarded as a password for verifying conditional reception, which can further be set to be the default password PWD_ref.

On the other side, in FIG. 2A and FIG. 2B, the first indication message MSG_1, the second indication message MSG_2 and the third indication message MSG_3 are messages that the firmware update device 104 reminds the user, and can be represented by texts as well as pictures, voices, light indicators, etc. For example, if the indication messages are represented by texts, the first indication message MSG_1 can be:
"A firmware update is released. Download the update program? If yes, please press 1. If no, please press 2";
the second indication message MSG_2 can be:
   "Please input the parental lock password"; and
the third indication message MSG_3 can be:
   "Firmware download is completed. Start firmware update now? If yes, please press 1. If no, please press 2".

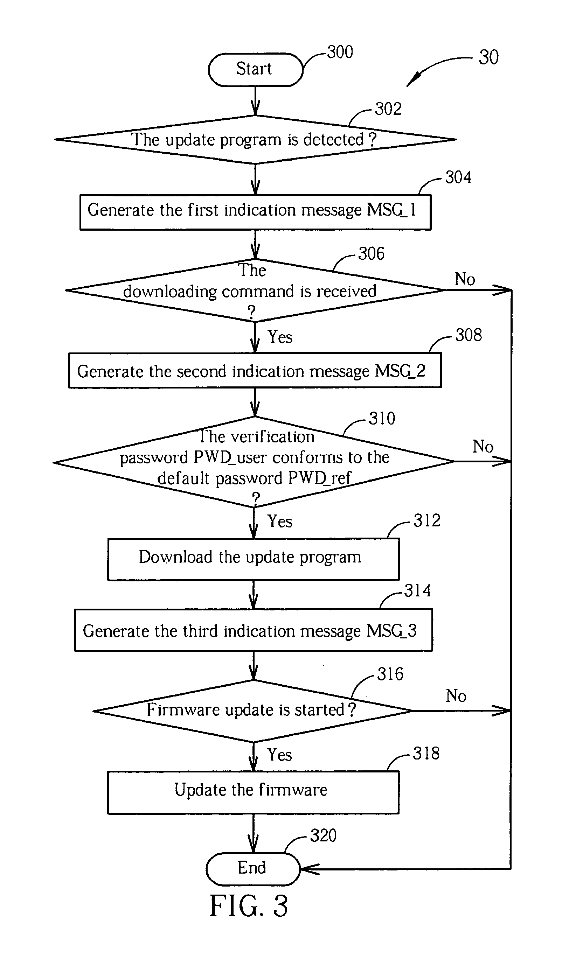

Additionally, operations of the firmware update device 104 can be summarized into an operation process 30, as illustrated in FIG. 3. The operation process 30 includes the following steps:
- Step 300:: Start.
- Step 302:: The detection module 200 detects that the update program is transmitted via the DTV broadcasting channel? If true, proceed to Step 304; else, proceed to Step 320.
- Step 304:: The first indication module 202 generates the first indication message MSG_1 to indicate the user to input the downloading command for triggering downloading of the update program.
- Step 306:: Determine whether the downloading command is received. If true, proceed to Step 308; else, proceed to Step 320.
- Step 308:: The second indication module 204 generates the second indication message MSG_2 to indicate the user to input the verification password PWD_user.
- Step 310:: The check module 206 determines whether the verification password PWD_user conforms to the default password PWD_ref. If true, proceed to Step 312; else, proceed to Step 320.
- Step 312:: The downloading unit 210 downloads the update program via the DTV broadcasting channel.
- Step 314:: The third indication unit 212 generates the third indication message MSG_3 to indicate the user to start firmware update when the update program is completely downloaded.
- Step 316:: Determine whether the user start firmware update. If true, proceed to the Step 318; else, proceed to the Step 320.
- Step 318:: The update unit 214 replaces the original firmware stored in the storage device 102 with the update program downloaded by the downloading unit 210.
- Step 320:: End.

The operation process 30 is utilized for describing operations of the firmware update device 104, and details thereof can be referred in the above and not further narrated herein.

In the prior art, when a TV manufacturer intends to update a firmware of a DTV just leaving a factory, related data can be converted into data streams conforming to DTV transmission standards to be broadcasted through TV stations in specific periods. Since the user cannot control the DTV during the firmware update process, those who are unfamiliar with update operations probably ascribe the uncontrollable period to an overheating problem, and erroneously shut off power supply of the DTV. Such an operation results in firmware update failure, and in the worst case, the user can no longer turn on the DTV, causing inconvenience of usage.

In comparison, according to the present invention, when the TV manufacturer releases the DTV 10 firmware or software update via "Over The Air Download", the firmware update device 104 can prevent the user from erroneously triggering firmware update by the password verification scheme. As a result, without the correct password, those who are unfamiliar with DTV operations, like children, incautious elders, etc., no longer erroneously shut off power supply of the DTV when there is a firmware of a newer version to be updated, to guarantee that the DTV 10 can normally operate.

To sum up, the present invention can prevent the user from erroneously triggering firmware update, to eliminate erroneous interruptions of power supply due to unfamiliarity with the firmware update process, so as to guarantee that the DTV can normally operate, to enhance utilization convenience.

## Claims

1. A method capable of preventing erroneous start of firmware update in a digital television (10), abbreviated to DTV hereinafter, comprising:
detecting whether an update program corresponding to the firmware is transmitted via a DTV broadcasting channel, to generate a detection result (302); and
generating a first indication message indicating to input a downloading command for triggering downloading of the update program when the detection result indicates that the update program corresponding to the firmware is transmitted via the DTV broadcasting channel (304);
**characterized by**
generating a second indication message indicating to input a verification password when the downloading command is received (308);
checking whether the verification password conforms to a default password of the DTV when the verification password is received, to generate a verification result (310); and
determining whether to replace the firmware with the update program according to the verification result (310).

2. The method of claim 1, **characterized in that** the default password (PWD_ref) is a parental lock password.

3. The method of claim 1, **characterized in that** the default password (PWD_ref) is a password for verifying conditional reception.

4. The method of any one of claims 1 to 3, **characterized in that** the default password (PWD_ref) is set before the DTV leaves a factory.

5. The method of any one of claims 1 to 4 further comprising:
downloading the update program via the DTV broadcasting channel when the verification result indicates that the received verification password conforms to the default password of the DTV (312);
generating a third indication message indicating to input a start command for starting to convert the firmware to the update program when the update program is completely downloaded (314); and
replacing the firmware with the update program when the start command is received (318).

6. An electronic device (104) capable of preventing erroneous start of firmware update in a digital television (10), abbreviated to DTV hereinafter, comprising:
a detection module (200), for detecting whether an update program corresponding to the firmware is transmitted via a DTV broadcasting channel, to generate a detection result; and
a first indication module (202), for generating a first indication message indicating to input a downloading command for triggering downloading of the update program when the detection result indicates that the update program corresponding to the firmware is transmitted via the DTV broadcasting channel;
**characterized by**
a second indication module (204), for generating a second indication message indicating to input a verification password when the downloading command is received;
a check module (206), for checking whether the verification password conforms to a default password of the DTV when the verification password is received, to generate a verification result; and
a control module (208), for determining whether to replace the firmware with the update program according to the verification result.

7. The electronic device of claim 6, **characterized in that** the default password (PWD_ref) is a parental lock password.

8. The electronic device of claim 6, **characterized in that** the default password (PWD_ref) is a password for verifying conditional reception.

9. The electronic device of any one of claims 6 to 8, **characterized in that** the default password (PWD_ref) is set before the DTV leaves a factory.

10. The electronic device of any one of claims 6 to 9, **characterized in that** the control module (208) comprises:
a downloading unit (210), for downloading the update program via the DTV broadcasting channel when the verification result indicates that the received verification password conforms to the default password of the DTV;
a third indication unit (212), for generating a third indication message indicating to input a start command for starting to convert the firmware to the update program when the update program is completely downloaded; and
an update unit (214), for replacing the firmware with the update program when the start command is received.

11. A digital television (10), abbreviated to DTV hereinafter, capable of preventing erroneous start of firmware update comprising:
a storage device (102), for storing the firmware;
a processing circuit (100), for performing a plurality of functions according to the firmware stored in the storage device; and
a firmware update device (104) comprising:
a detection module (200), for detecting whether an update program corresponding to the firmware is transmitted via a DTV broadcasting channel, to generate a detection result; and
a first indication module (202), for generating a first indication message indicating to input a downloading command for triggering downloading of the update program when the detection result indicates that the update program corresponding to the firmware is transmitted via the DTV broadcasting channel;
**characterized by**
a second indication module (204), for generating a second indication message indicating to input a verification password when the downloading command is received;
a check module (206), for checking whether the verification password conforms to a default password of the DTV when the verification password is received, to generate a verification result; and
a control module (208), for determining whether to replace the firmware with the update program according to the verification result.

12. The DTV of claim 11, **characterized in that** the default password (PWD_ref) is a parental lock password.

13. The DTV of claim 11, **characterized in that** the default password (PWD_ref) is a password for verifying conditional reception.

14. The DTV of any one of claims 11 to 13, **characterized in that** the default password (PWD_ref) is set before the DTV leaves a factory.

15. The DTV of any one of claims 11 to 14, **characterized in that** the control module (208) comprises:
a downloading unit (210), for downloading the update program via the DTV broadcasting channel when the verification result indicates that the received verification password conforms to the default password of the DTV;
a third indication unit (212), for generating a third indication message indicating to input a start command for starting to convert the firmware to the update program when the update program is completely downloaded; and
an update unit (214), for replacing the firmware with the update program when the start command is received.

## Amended claims

### Amended claims in accordance with Rule 137(2) EPC.

**1.** A method capable of preventing erroneous start of firmware update in a digital television(10), abbreviated to DTV hereinafter, comprising:
detecting whether an update program corresponding to the firmware is transmitted via a DTV broadcasting channel, to generate a detection result(302);
generating a first indication message indicating to input a downloading command for triggering downloading of the update program when the detection result indicates that the update program corresponding to the firmware is transmitted via the DTV broadcasting channel(304,306);
**characterized by**
generating a second indication message indicating to input a verification password when the downloading command is received(308);
checking whether the verification password conforms to a default password of the DTV(10) when the verification password is received, to generate a verification result(310); and
determining whether to replace the firmware with the update program according to the verification result.

**2.** The method of claim 1, **characterized in that** the default password is a parental lock password.

**3.** The method of claim 1, **characterized in that** the default password is a password for verifying conditional reception.

**4.** The method of claim 1, **characterized in that** the default password is set before the DTV(10) leaves a factory.

**5.** The method of claim 1 further comprising:
downloading the update program via the DTV broadcasting channel when the verification result indicates that the received verification password conforms to the default password of the DTV(312);
generating a third indication message indicating to input a start command for starting to replace the firmware with the update program when the update program is completely downloaded(314); and
replacing the firmware with the update program when the start command is received(316).

**6.** An electronic device capable of preventing erroneous start of firmware update in a digital television(10), abbreviated to DTV hereinafter, comprising:
a detection module (200), for detecting whether an update program corresponding to the firmware is transmitted via a DTV broadcasting channel, to generate a detection result; and
a first indication module(202), for generating a first indication message(MSG1) indicating to input a downloading command for triggering downloading of the update program when the detection result indicates that the update program corresponding to the firmware is transmitted via the DTV broadcasting channel;
**characterized by**
a second indication module(204), for generating a second indication message(MSG2) indicating to input a verification password when the downloading command is received;
a checkmodule (206), for checking whether the verification password conforms to a default password of the DTV (10) when the verification password is received, to generate a verification result; and
a control module (208), for determining whether to replace the firmware with the update program according to the verification result.

**7.** The electronic device of claim 6, **characterized in that** the default password is a parental lock password.

**8.** The electronic device of claim 6, **characterized in that** the default password is a password for verifying conditional reception.

**9.** The electronic device of claim 6, **characterized in that** the default password is set before the DTV(10) leaves a factory.

**10.** The electronic device of claim 6, **characterized in that** the control module(208) comprises:
a downloading unit(210), for downloading the update program via the DTV broadcasting channel when the verification result indicates that the received verification password conforms to the default password of the DTV(10);
a third indication unit(212), for generating a third indication message(MSG3) indicating to input a start command for starting to replace the firmware with the update program when the update program is completely downloaded; and
an update unit(214), for replacing the firmware with the update program when the start command is received.

**11.** A digital television (10), abbreviated to DTV hereinafter, capable of preventing erroneous start of firmware update comprising:
a storage device(102), for storing the firmware;
a processing circuit (100), for performing a plurality of functions according to the firmware stored in the storage device(102); and
a firmware update device(104) comprising:
a detection module(200), for detecting whether an update program corresponding to the firmware is transmitted via a DTV broadcasting channel, to generate a detection result; and
a first indication module (202), for generating a first indication message(MSG1) indicating to input a downloading command for triggering downloading of the update program when the detection result indicates that the update program corresponding to the firmware is transmitted via the DTV broadcasting channel;
**characterized by**
a second indication module(204), for generating a second indication message(MSG2) indicating to input a verification password when the downloading command is received;
a check module(206), for checking whether the verification password conforms to a default password of the DTV(10) when the verification password is received, to generate a verification result; and
a control module (208), for determining whether to replace the firmware with the update program according to the verification result.

**12.** The DTV(10) of claim 11, **characterized in that** the default password is a parental lock password.

**13.** The DTV (10) of claim 11, **characterized in that** the default password is a password for verifying conditional reception.

**14.** The DTV(10) of claim 11, **characterized in that** the default password is set before the DTV(10) leaves a factory.

**15.** The DTV(10) of claim 11, **characterized in that** the control module(208) comprises:
a downloading unit(210), for downloading the update program via the DTV broadcasting channel when the verification result indicates that the received verification password conforms to the default password of the DTV(10);
a third indication unit(212), for generating a third indication message(MSG3) indicating to input a start command for starting to replace the firmware with the update program when the update program is completely downloaded; and
an update unit (214), for replacing the firmware with the update program when the start command is received.
